# EUROPEAN PATENT APPLICATION

(11) **EP 4 156 478 A1**
(43) Date of publication of application: **29.03.2023**
(21) Application number: 21198327.5
(22) Date of filing: 22.09.2021
(51) Int. Cl.: H02M 1/00, H02M 1/08, H02M 1/38, H02M 7/5387

(54) **POWER INVERTER DEVICE WITH OPTIMIZED SWITCHING BEHAVIOR**

(71) Applicant: Airbus SAS, 31707 Blagnac (FR)
(72) Inventor: KAPAUN, Florian, 82024 Taufkirchen (DE)
(74) Representative: LKGLOBAL Lorenz & Kopf PartG mbB Patentanwälte

(57) **Abstract**

A power inverter device is proposed, comprising at least one half bridge having a DC voltage input, a first switching unit and a second switching unit for supplying an electric consumer with a modulated voltage on a voltage output, a gate driver, a control unit, and at least one sensor, wherein the at least one half bridge is connected to the voltage input, wherein the at least one half bridge is designed to selectively switch the first switching unit and the second switching unit into a closed state or an open state, wherein the gate driver is in a signal connection with the at least one half bridge and is adapted to generate at least one switching signal transferrable to the at least one half bridge to alternatingly switch the respective switching units with a switching pattern having a dead time between consecutive switching sequences, wherein the at least one sensor is adapted for measuring an electric parameter in the form of at least one of a voltage and a current at the voltage output, wherein the control unit is in signal connection with the gate driver and is adapted to control the gate driver to at least influence the dead time, and wherein the control unit is in signal connection with the at least one sensor and is further adapted to adjust the dead time depending on the measured electric parameter and a data set of measured electric parameters and correlated, predetermined dead time values.

## Description

### Technical field

The invention relates to a power inverter device and a vehicle comprising such a power inverter device .

### Background of the invention

Modern power electronic inverters usually comprise at least one half bridge having one high side and one low side switch that are connected in series, or a combination of multiple half bridges. To avoid a short circuit caused by a switched-on high side and low side switch at the same time, an inserted so called dead time is necessary. The dead time defines a time span between switch-off of one and switch-on of the complementary switch or vice-versa. For ideal switches this time may be 0s. As semiconductors are not ideal due to rise and fall times as well as parasitic components, a value in the range of some nanoseconds with wide band gap semiconductors up to some milliseconds with thyristors need to be chosen. However, the dead time influences the resulting switching behavior and switching losses. These losses may increase up to more than 20% only by choosing the wrong parameters for dead time. In addition, the values for rise and fall time and therefore the optimal dead time depend on the actual load current and voltage level.

### Summary of the invention

It is an object of the invention to propose an improved power inverter circuit, which has a significantly reduced switching loss and an improved overall efficiency.

The object is met by a power inverter circuit having the features of independent claim 1. Advantageous embodiments and further improvements may be gathered from the subclaims and the following description.

A power inverter device is proposed, comprising at least one half bridge having a DC voltage input, a first switching unit and a second switching unit for supplying an electric consumer with a modulated voltage on a voltage output, a gate driver, a control unit, and at least one sensor, wherein the at least one half bridge is connected to the voltage input, wherein the at least one half bridge is designed to selectively switch the first switching unit and the second switching unit into a closed state or an open state, wherein the gate driver is in a signal connection with the at least one half bridge and is adapted to generate at least one switching signal transferrable to the at least one half bridge to alternatingly switch the respective switching units with a switching pattern having a dead time between consecutive switching sequences, wherein the at least one sensor is adapted for measuring an electric parameter in the form of at least one of a voltage and a current at the voltage output, wherein the control unit is in signal connection with the gate driver and is adapted to control the gate driver to at least influence the dead time, and wherein the control unit is in signal connection with the at least one sensor and is further adapted to adjust the dead time depending on the measured electric parameter and a data set of measured electric parameters and correlated, predetermined dead time values.

The power inverter device comprises an electric circuit that is adapted for providing an alternating current (AC) for an electric machine from a DC source. For this, the at least one half bridge is used, which may be designed according to commonly known half bridges. A half bridge may be associated to the gate driver and comprises the pair of the first and second switching units, which may exemplarily be realized in the form of field effect transistors (FETs). The first switching unit may be considered a "high side" switching unit, while the second switching unit may be considered a "low side" switching unit. The gate driver is provided for initiating the switching action of the first and second switches to selectively couple the DC voltage source or a reference voltage, such as the ground voltage, to the voltage output. By using a certain switching pattern, the characteristics of the generated modulated, i.e. alternating, current is influenced.

For controlling the individual switches, the gate driver is in a signal connection with the at least one half bridge and continuously sends the at least one switching signal to the switches. For example, the at least one switching signal may be based on a PWM signal or similar. In the context of the invention it is required to avoid a short circuit by putting both the first and second switch into the closed state at the same time through using the above-identified dead time between two consecutive switching signals to put both switching units into the closed state.

The at least one sensor is arranged to measure the voltage or the current at the voltage output. It may be a part of the control unit or be provided as a separate unit. The at least one sensor allows a feedback of momentary electric parameters to the control unit to allow the control unit to suitably adjust the switching pattern in-situ. While it is advantageous to measure the current and the voltage, it may also be possible to measure just one of the current and the voltage.

Through the signal connection between the control unit and the gate driver, the control unit is able to control the behavior of the gate driver. It is conceivable that the control unit is able to send control signals to the gate driver that at least leads to an adjustment of the dead time in the at least one switching signal. However, it may also be conceivable that the control unit further adjusts the switching pattern in general, in order to increase or decrease a switching frequency or other parameters. For this purpose, the control unit may comprise a signal input, which receives a frequency or rotational speed demand from another entity, which is processed to control the gate driver in a suitable way.

A gist of the invention lies in providing a simplified and very effective way to control the at least one half bridge for improving the efficiency of the inverter device. For achieving this, the at least one half bridge needs to be analyzed in order to evaluate the voltage- and current-depending switching behavior. This may exemplarily be accomplished by a double pulse test. It is conceivable that the power inverter device is coupled with a DC power supply and an inductive load. The gate driver will be triggered to initiate switching the switching units into the closed or open state. A number of switching cycles may be done, wherein switching losses are measured preferably at each cycle.

By variation of the applied dead time, a change in switching losses can be recognized and ideal operating points can be identified, where the switching losses are minimum. For example, if the dead time is too small, losses in the power inverter device increase according to a certain shoot-through. This means, that a high side and a low side switch are conducting at the same time for a short instance. If the value for the dead time is too high, an antiparallel diode, such as a MOSFET or SiC diode, may start conducting for a short instance, which resultantly leads to additional losses. In particular, a reverse recovery charge that is stored in such a diode leads to an increase of switching losses. The minimum switching losses may usually arise in the point, where the diode is completely shunted by the parallel switching unit and therefore does not conduct, while the dead time is sufficiently large to avoid a short circuit. Then, the circuit shows almost no reverse recovery and therefore a much smoother switching behavior with less disturbances and overshoot is achieved. Additionally the influence of the snappy diode can be minimized.

After identification of a plurality of these optimized dead time values, these may be stored in the control unit, together with associated current and/or voltage values. This allows the control unit to retrieve predetermined optimum dead time values for a momentary operating point that is measured by the at least one sensor. Thus, the control unit does not need to conduct a closed loop control of the switching units, but it may simply apply previously identified optimum parameters, such as optimum dead time values. The identification of these optimum parameters may be conducted through an external, separate initialization unit, which is connectable to the at least one half bridge. The identified parameters may then be transferred to the control unit to be used during normal operation of the power inverter device. The initialization unit may be used just once, i.e. a single time, before the power inverter device is used. However, it may be conceivable that the control unit itself may be able to conduct such a process for identification if optimum parameters. It is furthermore conceivable that the process for identification, either conducted by an initialization unit or the control unit, may be conducted in a predetermined time interval, e.g. during a maintenance operation.

It is conceivable that the data set comprises a three-dimensional data set of dead time, current and voltage values, wherein the control unit is adapted for interpolating a desired dead time value depending on the measured electric parameters. For example, the control unit may be adapted for a trilinear or tricubic interpolation, in order to identify an optimum dead time value for a given voltage and current value. For reducing the effort in providing a suitable dead time value it is conceivable that the interpolation is based on an as simple algorithm as possible, which may include the trilinear interpolation.

In an alternative, the control unit may also be adapted for identification of a nearest dead time value for given voltage and current values, which may further reduce the effort in retrieving a suitable dead time value.

In an advantageous embodiment, the data set comprises a look-up table. It may be understood as an array of parameters, which may include values for the dead time, the current and the voltage, which are associated with each other. The control unit may load the look-up table at the start of operation into a memory unit. During the operation, the control unit may simply select dead time values that are associated with measured current and voltage values. It may be advantageous if the control unit conducts an interpolation or selects the dead time values that are nearest to the measured current and voltage values.

The control unit may be adapted for creating at least a part of the data set through calculation from a predefined analytic formula. It is conceivable that the dead time may follow a certain mathematical relationship to the current and voltage values. The relationship may be identified through conducting the double pulse test or a similar process, as explained above. Instead of storing an array of different values it may be possible to define an approximation through a mathematical function. Such a function may e.g. be of a first, second, third or fourth order. The control unit may thus simply approximate a value for a required dead time from measured current and voltage values through such a formula. The formula may e.g. include a polynomial function.

It is conceivable that the control unit or an external initialization unit, which is couplable with the control unit, is adapted to measure switching parameters of the at least one half bridge through conducting double-pulse tests at different voltages and/or currents, wherein the control unit or the external initialization unit is adapted to vary the dead time through a range of different dead times in an iterative process when conducting the double-pulse tests, such that the control unit or the external initialization unit is able to monitor resulting switching losses at the different voltages and/or currents, and wherein the control unit is adapted to store dead time values corresponding to minimum switching losses for the different voltages and/or currents. As explained further above, a double-pule test is a feasible method for measuring switching parameters of semiconductor switching units, which allows to analyze and thus optimize the behavior of the power inverter device. Either the control unit itself or a separate component in the form of an initialization unit may be used for this process. If an external initialization unit is used, the control unit may comprise a simpler design and requires less functions and processing power. As explained above, it is conceivable that the process of identification of the optimum dead time values is conducted only once, as the results from the process provide the basis for a continuous, optimized operation.

At least one of the first switching unit and the second switching unit may comprise at least one semiconductor switch, in particular a field-effect transistor switch or insulated gate bipolar transistors. These may include n-MOSFETs (n-type metal oxide semiconductor field-effect transistors, enhancement type), JFETs (junction field-effect transistors) or p-MOSFETs (p-type metal oxide semiconductor field-effect transistors). Also, the switching units may also have IGBTs (Insulated Gate Bipolar Transistors).

The power inverter device may comprise n half-bridges, each having a first switching unit and a second switching unit, for supplying an n-phase electrical machine with an n-phase supply voltage via phase connections assigned to the respective half-bridges, where n is at least 2. All half bridges may be analyzed to identify the respective optimum dead time values. The control unit as well as the gate driver are adapted to control all of the half-bridges to provide a modulated, alternating voltage for an electric consumer in the form of an electric machine that requires n phases. For example, the number of phases may be three.

The invention further relates to a vehicle comprising a DC voltage source, an AC voltage electric machine, and at least one power inverter device according to the above description, wherein the electric machine is couplable to the voltage output of the at least one power inverter device, and wherein the at least one power inverter device is couplable with the DC voltage source. The electric machine may be a drive unit for providing thrust or a movement of a mechanical element that is installed in the vehicle, such as a lift influencing surface or a landing gear of an aircraft.

For example ,the vehicle may be an aircraft. The aircraft may be a commercial or a military aircraft.

The invention further relates to a method for operating a power inverter device, comprising generating at least one switching signal by a gate driver, which is in a signal connection with at least one half bridge having a DC voltage input, a first switching unit and a second switching unit for supplying an electric consumer with a modulated voltage on a voltage output, for alternatingly switching the respective switching units into a closed or open state with a switching pattern having a dead time between consecutive switching sequences, measuring an electric parameter in the form of at least one of a voltage and a current at the voltage output through at least one sensor, and adjusting the dead time depending on the measured electric parameter and a data set of measured electric parameters and correlated, predetermined dead time values through a control unit, which is in signal connection with the at least one sensor.

The method may further comprise measuring switching parameters of the at least one half bridge by the control unit or an external initialization unit, which is couplable with the control unit, through conducting double-pulse tests at different voltages and/or currents, varying the dead time through a range of different dead times in an iterative process when conducting the double-pulse tests through the control unit or the external initialization unit, such that the control unit or the external initialization unit is able to monitor resulting switching losses at the different voltages and/or currents, and storing dead time values corresponding to minimum switching losses for the different voltages and/or currents by the control unit.

As stated above, the data set may comprise a three-dimensional data set of dead time, current and voltage values, wherein the method may further comprise interpolating a desired dead time value depending on the measured electric parameters by the control unit.

The method may further comprise creating at least a part of the data set through calculation from a predefined analytic formula by the control unit.

### Brief description of the figures

In the following, the attached drawings are used to illustrate exemplary embodiments in more detail. The illustrations are schematic and not to scale. Identical reference numerals refer to identical or similar elements. They show:
Fig. 1 shows a simplified illustration of the power inverter device.
Fig. 2 shows a more detailed illustration of a half bridge.
Fig. 3 shows a switching pattern.
Fig. 4 shows an arrangement of three half bridges for an n phase output voltage.
Fig. 5 shows an aircraft.
Fig. 6 shows a method in a schematic, block-oriented illustration.

### Detailed description of exemplary embodiments

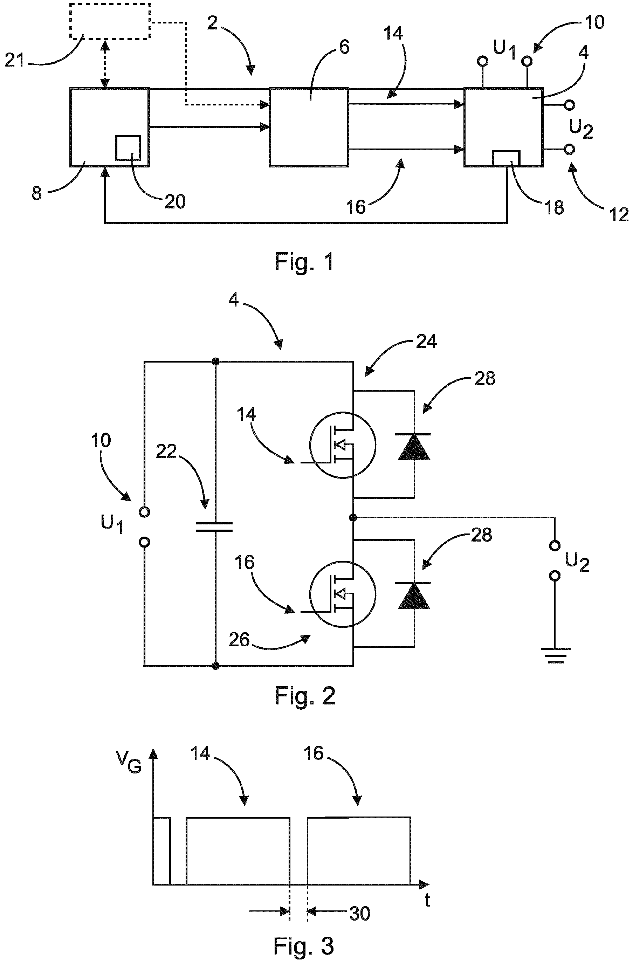

Fig. 1 shows a power inverter device 2 comprising a half bridge 4, which is coupled with a gate driver 6, which in turn is coupled with a control unit 8. The half bridge 4 is connected to a DC voltage input 10, which delivers a DC voltage U₁. The half bridge 4 is used for providing a modulated voltage U₂ at a voltage output 12.

The gate driver 6 is in a signal connection with the half bridge 4 and is adapted to generate switching signals transferable to the half bridge 4, in order to change the switching state of two switching units (not shown in this illustration) inside the half bridge 4. Exemplarily, the gate driver 6 delivers a first signal 14 to switch a high side of the half bridge 4 as well as a second signal 16 to switch a low side of the half bridge 4. In doing so, the modulated, i.e. alternating, voltage U₂ is created.

By connecting the gate driver 6 to the control unit 8, the gate driver can be controlled. The control unit eight is adapted to control the gate driver 6 to at least influence the dead time between consecutive switching sequences initiated by the first signal 14 and the second signal 16.

A sensor 18, which may be integrated into the half bridge 4, measures the current and/or the voltage at the voltage output 12 and transfers the measured parameters to the control unit 8. The control unit 8 in turn is adapted to adjust the dead time depending on the measured electric parameters and a data set, in which several values for the voltage and/or current are correlated with predetermined optimum dead time values. For this, the control unit 8 may comprise a memory unit 20, which is able store and provide such a data set. The control unit 8 may load the data set from the memory unit 20 and select suitable dead time values depending on momentary current and/or voltage values.

In order to establish a suitable data set, the control unit 8 or another entity, such as an external initialization unit 21, which is shown as an alternative with dashed lines, may be adapted to measure switching parameters of the half bridge 4. The control unit 8 or the initialization unit 21, respectively, is adapted to measure switching parameters of the half bridge 4 through conducting double-pulse tests at different voltages and/or currents. The control unit 8 or the external initialization unit 21 is adapted to vary the dead time through a range of different dead times in an iterative process when conducting the double-pulse tests, such that the control unit 8, or the external initialization unit 21, is able to monitor resulting switching losses at the different voltages and/or currents. After such a test procedure, the control unit 8 stores dead time values corresponding to minimum switching losses for the different voltages and/or currents in the memory unit 20. This may either be done after receiving the respective values from the initialization unit 21 or directly from an algorithm running in the control unit 8, depending on the desired setup.

Fig. 2 shows the half bridge 4 in further detail. The half bridge 4 is supplied with the DC voltage U₁ at the voltage input 10. Furthermore, an intermediate capacitor 22 is provided. One terminal of the voltage input 10 is connected to a high potential, while the other terminal is at a low potential, for example ground. In the exemplary embodiment of Fig. 2, the top terminal relates to the high potential and the bottom terminal to the low potential.

The half bridge 4 comprises a first switching unit 24 and a second switching unit 26, which both are realized in the form of a semiconductor switch, such as field-effect transistor switches, e.g. n-MOSFETs, JFETs or p-MOSFETs. However, they may also comprise IGBTs. The switching units 24 and 26 generate a modulated, i.e. alternating, voltage at the voltage output 12 for supplying an electric consumer. The switching units 24 and 26 are controlled by the gate driver 6 to alternately switch the phase terminal of the voltage output 12 against the voltage U₁ or ground. For this, the switching units 24 and 26 receive the first signal 14 and the second signal, respectively.

Furthermore, both switching units 24 and 26 comprise an antiparallel diode 28, e.g. a body diode, that allows to provide a reverse current path, e.g. for instances where both switching units 24 and 26 are turned off.

Fig. 3 shows the signals 14 and 16 provided by the gate driver 6 and received by the switching units 24 and 26 over time. The signals 14 and 16 are generated alternately, such that the switching units 24 and 26 switch alternately. Between both signals 14 and 16, a dead time 30 is included, the length of which is influenced by the control unit 8 as stated above.

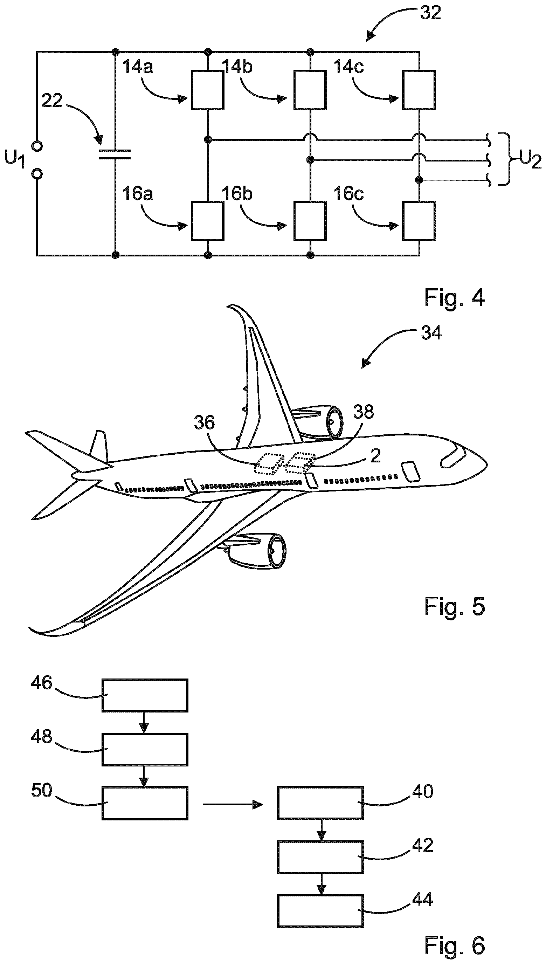

Fig. 4 exemplarily shows a modified half bridge arrangement 32 based on three half bridges 4 sharing a single intermediate capacitor 22 and having three sets of switching units 24a, 26a, 24b, 26b, 24c, 26c, which are used for generating a three-phase output voltage U₂. A respective gate driver would be adapted for generating signals 14a, 16a, 14b, 16b, 14c and 16c to initiate the switching of the switching units 24a, 26a, 24b, 26b, 24c, 26c. The basic principle of providing a dead time between consecutive switching signals corresponds to the above.

Fig. 5 shows an aircraft 34, which comprises at least one electric consumer 36, such as an electric machine, which is indicated by a box having dashed lines. It may be any kind of electric consumer and in particular any inductive load. The electric consumer 36 is connected to a power inverter device 2, which in turn is connected to a voltage source, in particular a high DC voltage source 38.

Fig. 6 shows a method for operating the power inverter device 2 in a block-oriented, schematic view. The method comprises generating 40 at least one switching signal 14, 16 by the gate driver 6, which is in a signal connection with the half bridge 4 having the DC voltage input 10, the first switching unit 24 and the second switching unit 26 for supplying the electric consumer 36 with a modulated voltage on the voltage output 12, for alternatingly switching the respective switching units 24, 26 into a closed or open state with a switching pattern having the dead time 30 between consecutive switching sequences. An electric parameter in the form of at least one of a voltage and a current at the voltage output 12 through the sensor 18 is measured 42. The dead time 30 is adjusted 44 depending on the measured electric parameter and a data set of measured electric parameters and correlated, predetermined dead time values through the control unit 8, which is in signal connection with the sensor 18.

Prior to operating the power inverter device 2, the method comprises measuring 46 switching parameters of the at least one half bridge 4 by the control unit 8 or the external initialization unit 21, which is couplable with the control unit 8, through conducting double-pulse tests at different voltages and/or currents. During this, the dead time 30 is varied 48 through a range of different dead times 30 in an iterative process when conducting the double-pulse tests through the control unit 8 or the external initialization unit 21, such that the control unit 8 or the external initialization unit 21 is able to monitor resulting switching losses at the different voltages and/or currents. Afterwards, dead time values corresponding to minimum switching losses for the different voltages and/or currents are stored 50 by the control unit 8.

### Reference numerals

- 2: power inverter device
- 4: half bridge
- 6: gate driver
- 8: control unit
- 10: DC voltage input
- 12: voltage output
- 14: first signal
- 16: second signal
- 18: sensor
- 20: memory unit
- 21: initialization unit
- 22: intermediate capacitor
- 24: first switching unit
- 24a: first switching unit
- 24b: first switching unit
- 24c: first switching unit
- 26: second switching unit
- 26a: second switching unit
- 26b: second switching unit
- 26c: second switching unit
- 28: diode
- 30: dead time
- 32: half bridge arrangement
- 34: aircraft
- 36: electric consumer
- 38: DC voltage source
- 40: generating
- 42: measuring
- 44: adjusting
- 46: measuring
- 48: varying
- 50: storing

## Claims

1. A power inverter device (2), comprising
at least one half bridge (4) having a DC voltage input (10), a first switching unit (24, 24a, 24b, 24c) and a second switching unit (26, 26a, 26b, 26c) for supplying an electric consumer (36) with a modulated voltage on a voltage output (12),
a gate driver (6),
a control unit (8), and
at least one sensor (18),
wherein the at least one half bridge (4) is connected to the voltage input (10), wherein the at least one half bridge (4) is designed to selectively switch the first switching unit (24, 24a, 24b, 24c) and the second switching unit (26, 26a, 26b, 26c) into a closed state or an open state,
wherein the gate driver (6) is in a signal connection with the at least one half bridge (4) and is adapted to generate at least one switching signal (14, 16) transferrable to the at least one half bridge (4) to alternatingly switch the respective switching units (24, 24a, 24b, 24c, 26, 26a, 26b, 26c) with a switching pattern having a dead time (30) between consecutive switching sequences,
wherein the at least one sensor (18) is adapted for measuring an electric parameter in the form of at least one of a voltage and a current at the voltage output (12),
wherein the control unit (8) is in signal connection with the gate driver (6) and is adapted to control the gate driver (6) to at least influence the dead time (30), and
wherein the control unit (8) is in signal connection with the at least one sensor (18) and is further adapted to adjust the dead time (30) depending on the measured electric parameter and a data set of measured electric parameters and correlated, predetermined dead time values.

2. The power inverter device (2) of claim 1,
wherein the data set comprises a three-dimensional data set of dead time (30), current and voltage values, and
wherein the control unit (8) is adapted for interpolating a desired dead time value depending on the measured electric parameters.

3. The power inverter device (2) of claim 1 or 2,
wherein the data set comprises a look-up table.

4. The power inverter device (2) of any of the preceding claims,
wherein the control unit (8) is adapted for creating at least a part of the data set through calculation from a predefined analytic formula.

5. The power inverter device (2) of any of the preceding claims,
wherein the control unit (8) or an external initialization unit (21), which is couplable with the control unit (8), is adapted to measure switching parameters of the at least one half bridge (4) through conducting double-pulse tests at different voltages and/or currents,
wherein the control unit (8) or the external initialization unit (21) is adapted to vary the dead time (30) through a range of different dead times (30) in an iterative process when conducting the double-pulse tests, such that the control unit (8) or the external initialization unit (21) is able to monitor resulting switching losses at the different voltages and/or currents, and
wherein the control unit (8) is adapted to store dead time values corresponding to minimum switching losses for the different voltages and/or currents.

6. The power inverter device (2) of any of the preceding claims,
wherein at least one of the first switching unit (24, 24a, 24b, 24c) and the second switching unit (26, 26a, 26b, 26c) comprises at least one semiconductor switch, in particular a field-effect transistor switch or insulated gate bipolar transistors.

7. The power inverter device (2) of any of the preceding claims,
comprising n half-bridges (4), each having a first switching unit (24, 24a, 24b, 24c) and a second switching unit (26, 26a, 26b, 26c), for supplying an n-phase electrical machine with an n-phase supply voltage via phase connections assigned to the respective half-bridges (4), where n is at least 2.

8. A vehicle comprising:
a DC voltage source (38),
an AC voltage electric machine (36), and
at least one power inverter device (2) according to any of the preceding claims,
wherein the electric machine (36) is couplable to the voltage output (12) of the at least one power inverter device (2), and
wherein the at least one power inverter device (2) is couplable with the DC voltage source (38).

9. The vehicle (34) of claim 8, wherein the vehicle (34) is an aircraft (34).

10. A method for operating a power inverter device (2), comprising:
generating (40) at least one switching signal (14, 16) by a gate driver (6), which is in a signal connection with at least one half bridge having (4) a DC voltage input (10), a first switching unit (24, 24a, 24b, 24c) and a second switching unit (26, 26a, 26b, 26c) for supplying an electric consumer (36) with a modulated voltage on a voltage output (12), for alternatingly switching the respective switching units (24, 24a, 24b, 24c, 26, 26a, 26b, 26c) into a closed or open state with a switching pattern having a dead time (30) between consecutive switching sequences,
measuring (42) an electric parameter in the form of at least one of a voltage and a current at the voltage output through at least one sensor (18), and
adjusting (44) the dead time (30) depending on the measured electric parameter and a data set of measured electric parameters and correlated, predetermined dead time values through a control unit (8), which is in signal connection with the at least one sensor (18).

11. The method of claim 10, further comprising
measuring (46) switching parameters of the at least one half bridge (4) by the control unit (8) or an external initialization unit (21), which is couplable with the control unit (8), through conducting double-pulse tests at different voltages and/or currents,
varying (48) the dead time (30) through a range of different dead times (30) in an iterative process when conducting the double-pulse tests through the control unit (8) or the external initialization unit (21), such that the control unit (8) or the external initialization unit (21) is able to monitor resulting switching losses at the different voltages and/or currents, and
storing (50) dead time values corresponding to minimum switching losses for the different voltages and/or currents by the control unit (8).

12. The method of claim 10 or 11,
wherein the data set comprises a three-dimensional data set of dead time, current and voltage values,
wherein the method further comprises interpolating a desired dead time value depending on the measured electric parameters by the control unit (8).

13. The method of any of the claims 10 to 12,
further comprising creating at least a part of the data set through calculation from a predefined analytic formula by the control unit (8).
